(19) Europäisches Patentamt
European Patent Office
Office européen des brevets

(11) **EP 1 861 808 B1**

(12) **EUROPÄISCHE PATENTSCHRIFT**

(45) Veröffentlichungstag und Bekanntmachung des Hinweises auf die Patenterteilung:
**26.05.2010 Patentblatt 2010/21**

(21) Anmeldenummer: 06707533.3

(22) Anmeldetag: **13.03.2006**

(51) Int Cl.:
*G06K 7/00* (2006.01)     *G06K 7/08* (2006.01)
*H01Q 1/36* (2006.01)

(86) Internationale Anmeldenummer:
**PCT/EP2006/002278**

(87) Internationale Veröffentlichungsnummer:
**WO 2006/097259 (21.09.2006 Gazette 2006/38)**

(54) **DATENÜBERTRAGUNGSVERFAHREN UND RFID-LESEGERÄT MIT SPULE UND REGELSCHALTUNG ZUR FELDAUSLÖSCHUNG AUSSERHALB DES KOMMUNIKATIONSBEREICHES**

DATA TRANSMISSION METHOD AND A FRID READER PROVIDED WITH A COIL AND A CONTROL CIRCUIT FOR FIELD QUENCHING OUTSIDE OF A COMMUNICATION AREA

PROCEDE DE TRANSMISSION DE DONNEES ET LECTEUR D'IDENTIFICATION PAR RADIOFREQUENCE (RFID) EQUIPE D'UNE BOBINE ET D'UN CIRCUIT DE REGULATION POUR UNE SUPPRESSION DE CHAMP A L'EXTERIEUR DE LA ZONE DE COMMUNICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.03.2005 DE 102005011611**

(43) Veröffentlichungstag der Anmeldung:
**05.12.2007 Patentblatt 2007/49**

(73) Patentinhaber: **Giesecke & Devrient GmbH 81677 München (DE)**

(72) Erfinder: **FINKENZELLER, Klaus 85774 Unterföhring (DE)**

(74) Vertreter: **Höhfeld, Jochen Klunker Schmitt-Nilson Hirsch Patentanwälte Destouchesstraße 68 80796 München (DE)**

(56) Entgegenhaltungen:
**EP-A- 1 494 311     WO-A-99/43096
DE-C1- 19 715 215**

EP 1 861 808 B1

**Beschreibung**

Die vorliegende Erfindung betrifft ein Lesegerät, welches zur Übertragung von Daten und/ oder Energie zwischen dem Lesegerät und einer Transpondereinheit dient. Ferner betrifft die Erfindung ein Verfahren und ein System zur Übertragung von Daten und/ oder Energie zwischen dem Lesegerät und der Transpondereinheit.

Im Zusammenhang mit der vorliegenden Erfindung wird als Transpondereinheit eine Anordnung aus einer Antenne und einer elektronischen Schaltung verstanden, wobei die Antenne in Form einer Antennenspule ausgebildet ist und die Schaltung in Form eines Chips ausgebildet sein kann. Derartige Transpondereinheiten werden in kontaktlosen Chipkarten, in auf Waren angebrachten Etiketten, in Schlüsseln insbesondere Autoschlüsseln als Wegfahrsperre, aber auch bei Tieren zur Identifikation verwendet.

Um kontaktlos Daten aus einer Transpondereinheit auszulesen und/ oder Daten an eine Transpondereinheit zu senden werden Lesegeräte eingesetzt, deren Aufbau prinzipiell bekannt ist. Zusätzlich können solche Lesegeräte die Transpondereinheit innerhalb einer bestimmten Entfernung kontaktlos mit Energie versorgen, so dass die Transpondereinheit keine eigene Energieversorgung benötigt. Solche kontaktlosen Daten- und Energieübertragungssysteme werden herkömmlich als RFID-Systeme (Radio Frequency Identification) bezeichnet. Sie besitzen eine bestimmte Energiereichweite und einen bestimmten Ansprechbereich.

Unter der Energiereichweite versteht man die Entfernung der Transpondereinheit zum Lesegerät, in der gerade noch ausreichend Energie vom Lesegerät zum Betrieb der Transpondereinheit zur Verfügung steht. Der maximale Ansprechbereich definiert den Bereich, innerhalb dessen Daten zwischen dem Lesegerät und dem Transponder gerade noch ausgetauscht werden können. Dabei ist die Energiereichweite kleiner als der maximale Ansprechbereich. Daher können vom Lesegerät gesendete Daten in größerer Entfernung durch die Transpondereinheit nur detektiert werden, wenn die Transpondereinheit eine eigene Energieversorgung besitzt, beispielsweise in Form einer Batterie. Solche Transpondereinheiten werden als aktive Transponder bezeichnet, im übrigen als passive Transponder.

Ein herkömmliches RFID-Lesegerät strahlt über eine Antennenspule ein hochfrequentes Magnetfeld von z.B. 13,56 MHz ab, wobei passive Transpondereinheiten innerhalb der Energiereichweite des Lesegeräts durch Gegenkopplung zwischen der Antennenspule des Lesegeräts und der Antennenspule der Transpondereinheit diesem Magnetfeld Energie entnehmen. Die für die Transpondereinheit verfügbare elektrische Leistung ist dabei proportional zu der magnetischen Feldstärke an der Antennenspule der Transpondereinheit. Typische Energiereichweiten solcher Systeme sind etwa 10 cm für ISO 14443 und bis zu 1 m für ISO 15693 kompatible Systeme. Die Datenübertragung vom Lesegerät zum Transponder kann beispielsweise durch Modulation des vom Lesegerät erzeugten Feldes erfolgen. Zur Datenübertragung von der Transpondereinheit zum Lesegerät ist das mit Abstand am häufigsten eingesetzte Verfahren die sogenannte Lastmodulation. Unterschiedliche Modulationsarten und deren technische Realisierung werden im "RFID-Handbuch" von Klaus Finkenzeller (ISBN 3-446-22071-2) beschrieben.

Da die zwischen Lesegerät und Transpondereinheit übertragenen Daten auch noch in größeren Entfernungen detektierbar sind, können sie mittels eines herkömmlichen Kurzwellen-Empfängers relativ einfach abgehört und demoduliert werden, wodurch ein Angriff auf ein RFID-System möglich ist. Beispielsweise ist es bei ISO 14443 bereits durch das Abhören der vom Lesegerät zur Transpondereinheit gesendeten Daten möglich, die eindeutige Seriennummer einer an der Datenübertragung beteiligten Transpondereinheit zu ermitteln. Ebenso können binäre Applikationsdaten mitgelesen werden, sofern diese nicht verschlüsselt übertragen werden. Besteht darüber hinaus eine Möglichkeit, Daten aus großer Entfernung an ein Lesegerät zurück zu senden, so kann auch aus großer Entfernung, z.B. über mehrere Meter, versucht werden, mit dem Lesegerät zu kommunizieren und ein RFID-System anzugreifen.

Das Dokument US 6,429,768 B1 beschreibt ein Sicherheitssystem für Fahrzeuge. Teil des Systems ist der Fahrzeugschlüssel, der mit einem passiven Transponder ausgestattet ist. Befindet sich der Transponder innerhalb der Energiereichweite und des Ansprechbereichs einer Leseeinrichtung des Fahrzeugs, welche hier ausschließlich zum Empfang von Daten des Transponders eingerichtet ist, so findet eine unidirektionale Datenübertragung vom Transponder zur Leseeinrichtung statt. Wenn der Transponder von der Leseeinrichtung als gültiger Transponder identifiziert wird, kann das Fahrzeug in Betrieb genommen werden. Die Datenübertragung kann durch einen im Fahrzeug angebrachten Störsender verhindert werden, wobei der Störsender erst dann ein Störsignal aussendet, wenn er durch eine Alarmsteuerung des Fahrzeugs aktiviert wird. Problematisch ist dabei, dass die Datenübertragung vom Transponder zur Leseeinrichtung mit einem herkömmlichen RFID-Lesegerät im gesamten Ansprechbereich, also auch außerhalb der Energiereichweite des Lesegeräts, "mitgehört" werden kann, so dass beispielsweise Autodiebe die transponderspezifischen Daten, welche für das in Betrieb nehmen des Fahrzeugs entscheidend sind, problemlos erlangen können.

Dagegen beschreibt das Dokument EP 0 833 169 A1 ein Verfahren, um unerwünschte Antworten eines "falschen" Transponders zu blockieren, der sich im Ansprechbereich eines Lesegeräts befindet. Dieses Verfahren wird im Zusammenhang mit einer automatischen Fahrzeugidentifikation auf Mautstraßen beschrieben, wo immer nur ein Fahrzeug mit einem Transponder überprüft werden soll, bevor es eine Schranke passieren darf.

Der Transponder wird als gültig erkannt, wenn die Maut bezahlt ist. Die Aufgabe des Lesegeräts besteht darin, den Transponder zu aktivieren, den Transponder abzufragen und nach einer gültigen Antwort des Transponders ein Bestätigungssignal an den Transponder zu senden. Dabei berechnet der Transponder mittels des Abfragesignals des Lesegeräts eine Prüfsumme und sendet nur bei einer gültigen Prüfsumme eine Antwort an das Lesegerät. In bestimmten Teilen des Ansprechbereichs des Lesegeräts wird mindestens ein vom Lesegerät lokal getrennter Störsender angebracht, der ein im Vergleich zum Lesegerät sehr leistungsstarkes Signal aussendet, damit alle "falschen" Transponder in diesem Teilbereich eine falsche Prüfsumme berechnen und dadurch keine Antwort aussenden. Die Realisierung eines solchen Systems ist sehr aufwendig, da für jeden Ansprechteilbereich des Lesegeräts, in dem die Kommunikation mit "falschen" Transpondern unmöglich gemacht werden soll, ein vom Lesegerät lokal getrennter Störsender angebracht werden muss.

Um in einem Lesegerät zu hohe Sendeleistungen zu vermeiden, beschreibt WO 99/43096 A1 eine automatische Anpassung der Sendeleistung des Lesegerätes. In DE 19715 215 C1 und EP 1494 311 A1 sind innere und äußere Wicklungen einer Spule so miteinander verbunden, dass der Strom in den inneren Wicklungen entgegengesetzt zu dem Strom in den äußeren Wicklungen verläuft. In größerer Entfernung von der Spule des Lesegerätes ist das Sendefeld der Spule somit minimiert. Die unabhängigen Ansprüche sind gegen diesen Stand der Tecknik abgegrenzt.

Es ist die Aufgabe der Erfindung, ein RFID-System auf einfache Weise vor Angriffen zu schützen und das Abhören einer Datenübertragung zwischen einem Lesegerät und einer Transpondereinheit zuverlässiger zu verhindern.

Diese Aufgabe wird durch ein Verfahren, ein Lesegerät und ein System gemäß den unabhängigen Ansprüchen gelöst. In davon abhängigen Ansprüchen sind vorteilhafte Ausgestaltungen und Weiterbildungen der Erfindung angegeben.

Das Lesegerät besitzt zwei Antennenspulen zur Erzeugung eines ersten und zweiten Magnetfelds, wobei die Magnetfelder mittels einer Regelschaltung des Lesegeräts so angepasst werden, dass sie außerhalb eines Nahbereichs des Lesegeräts den gleichen Betrag und umgekehrte Vorzeichen besitzen. Dadurch löschen sich das erste und das zweite Magnetfeld außerhalb des Nahbereichs des Lesegeräts gegenseitig aus. Innerhalb des Nahbereichs kann das Lesegerät dagegen über die Antennenspule, die im Nahbereich das stärkere Magnetfeld erzeugt, mit Transpondern kommunizieren. Dabei dient diese Antennenspule zur Spannungsversorgung der Transpondereinheit, wenn mit passiven Transpondern kommuniziert wird, und/oder zur Datenübertragung zwischen Lesegerät und Transpondereinheit.

Ein Vorteil der Erfindung besteht darin, dass im Zusammenhang mit einem erfindungsgemäßen RFID-System an den Transpondern keinerlei Anpassungen vorzunehmen sind. Innerhalb des Nahbereichs des Lesegeräts können herkömmliche Transponder problemlos gelesen werden. Außerhalb des Nahbereichs, also im Bereich der Feldauslöschung, kann eine Kommunikation nicht abgehört werden. Im Zusammenhang mit der Erfindung wird der Nahbereich auch als Kommunikationsbereich bezeichnet, da außerhalb dieses Bereichs keine Datenkommunikation zwischen Lesegerät und Transpondern möglich ist bzw. passive Transponder nicht mit Energie versorgt werden können.

Um die beiden Magnetfelder zu erzeugen, werden die Antennenspulen jeweils mit einem definierten Strom gespeist. Mit zunehmender Entfernung (x) von der Spule nimmt die Stärke des magnetischen Feldes ab, wobei die Feldstärke bis zu einer vom Spulenradius (r) abhängigen Entfernung nahezu konstant bleibt und danach stark abfällt. Je größer der Strom durch die jeweilige Antennenspule ist, desto größer ist auch die Feldstärke des erzeugten magnetischen Wechselfeldes. Dadurch können der Ansprechbereich und die Energiereichweite jeder Spule vergrößert oder verkleinert werden. Es ist bekannt, dass der Verlauf der Feldstärken zweier Antennenspulen bei gleichem Stromdurchfluss verschieden ist, wenn die Antennenspulen unterschiedliche Spulendurchmesser (r) besitzen, die Leiterschleifen also unterschiedliche Flächen umschließen. Je kleiner der Spulenradius ist, desto größer ist zwar die Feldstärke in Spulennähe, desto eher fällt aber die Feldstärke mit zunehmendem Abstand ab.

Vorzugsweise besitzen die beiden Antennenspulen des Lesegeräts daher unterschiedliche Spulendurchmesser. Dabei werden die Antennenspulen erfindungsgemäß mit Strömen gespeist, welche in unterschiedliche Richtungen zeigen, um so zwei entgegengesetzte Magnetfelder zu erzeugen. Das erfindungsgemäße Lesegerät ist so eingerichtet, dass die beiden Magnetfelder gleichzeitig erzeugt werden und das erste Magnetfeld der ersten Antennenspule im Nahbereich des Lesegeräts größer ist als das zweite Magnetfeld der zweiten Antennenspule, so dass die beiden Magnetfelder erst in einem bestimmten Abstand vom Lesegerät näherungsweise die gleiche Feldstärke besitzen. In einem Diagramm betrachtet, in dem die Feldstärke im Verhältnis zum Abstand (x) vom Lesegerät dargestellt ist, fallen ab diesem Abstand die Kurven der beiden Feldstärken in etwa zusammen. Durch Änderung der Spulendurchmesser lässt sich das Lesegerät an unterschiedliche Kommunikationsbereiche anpassen.

Während das erste, von der kleinen Antennenspule erzeugte Magnetfeld zur Kommunikation, also zur Daten- und/oder Energieübertragung, zwischen dem Lesegerät und dem Transponder dient, wird das zweite, von der großen Spule erzeugte Magnetfeld vorzugsweise nur dazu verwendet, eine Feldauslöschung der beiden Magnetfelder außerhalb des Nahbereichs des Lesegeräts zu erreichen. Da die Feldstärke des ersten Magnetfelds im Kommunikationsbereich größer als die Feldstärke des zweiten Magnetfelds ist, kann das Lesegerät im Kommunikationsbereich über die erste Antennenspule trotz des von der zweiten Antennenspule erzeugten zweiten Magnetfelds mit der mindestens einen Transpondereinheit kommunizieren. Dazu sind die Durchmesser der beiden Antennenspulen vorzugsweise so ausgelegt, dass im Kommunikationsbereich des Lesegeräts die Feldstärke der ersten, kleineren Antennenspule deutlich größer ist als die Feldstärke der zweiten, größeren Antennenspule. Wird die Transpondereinheit aus dem Kommunikationsbereich heraus bewegt, ist keine Kommunikation mehr möglich, da in diesem entfernten Bereich das zweite Magnetfeld den gleichen Betrag und ein umgekehrtes Vorzeichen besitzt, wodurch sich die Magnetfelder gegenseitig auslöschen. Ein Abhören der Kommunikation zwischen Lesegerät und Transpondereinheit aus größeren Entfernungen wird verhindert, da außerhalb des Kommunikationsbereichs des Lesegeräts kein magnetisches Feld mehr detektierbar ist. Dieser entfernte Bereich kann daher auch als abhörsicherer Bereich bezeichnet werden.

Zu beachten ist dabei jedoch folgende Wechselwirkung. Wird ein Transponder in den Kommunikationsbereich, d.h. den Nahbereich, des Lesegeräts gebracht, so wird durch die magnetische Gegeninduktivität zwischen den Antennen des Lesegeräts und dem eingebrachten Transponder in den Antennenspulen des Lesegeräts eine Impedanz transformiert. Der Betrag der eingekoppelten Impedanz ist dabei abhängig von der Güte des Transponders, der Leistungsaufnahme des Transponders und dem Koppelfaktor zwischen den Spulen, also vom Abstand und der Antennengröße des Transponders. Dadurch wird ein abgestimmtes Verhältnis zwischen den Strömen für die beiden Antennenspulen des Lesegeräts aus dem Gleichgewicht gebracht, wodurch die Feldauslöschung außerhalb des Nahbereichs nicht mehr sichergestellt ist, da ein Ungleichgewicht des Verhältnisses der Ströme zu einer mehr oder weniger starken Feldstärke im eigentlich abhörsicheren Bereich führt. Dann kann auch außerhalb des eigentlichen Kommunikationsbereichs eine Kommunikation zwischen Transponder und Lesegerät möglicherweise mitgehört werden.

Die Regelschaltung des Lesegeräts umfasst gemäß einer ersten Variante eine stromgesteuerte Stromquelle, welche als Stromspiegel bezeichnet wird, wenn eine Vorzeichenumkehr des Ausgangsstroms erfolgt. Der Stromspiegel ist eine Schaltung, deren Ausgangsstrom (idealerweise) den gleichen Verlauf aufweist, wie der Eingangsstrom. Die Amplitude ist jedoch im Allgemeinen größer oder kleiner. In der vorliegenden Erfindung wird der Stromspiegel dazu eingesetzt, den Strom für die zweite, größere Antennenspule von dem Strom für die erste, kleinere Antennenspule abzuleiten. Dabei wird der Strom für die zweite Antennenspule so angepasst, dass er in der zweiten Antennenspule ein Magnetfeld mit umgekehrten Vorzeichen erzeugt, welches außerhalb des Kommunikationsbereichs des Lesegeräts die gleiche Feldstärke aufweist wie das erste Magnetfeld. Der Strom für die erste Antennenspule ist somit der vom Lesegerät bereitgestellte Strom und dient als Referenzstrom. Der Vorteil des Stromspiegels besteht darin, dass sich der Strom für die zweite Antennenspule genau vom Strom für die erste Antennenspule ableiten lässt, um so zuverlässig eine Feldauslöschung außerhalb des Kommunikationsbereichs des Lesegeräts zu erreichen.

Gemäß einer zweiten Variante dient als Eingangsgröße für die Regelschaltung die außerhalb des Kommunikationsbereichs festzustellende magnetische Feldstärke. Denn bereits kleine Abweichungen in der Phase oder Amplitude des Stromes einer der beiden Spulen vom optimalen Wert führen zu einem signifikanten Anstieg der messbaren Feldstärke im Bereich x»r, wodurch ein Mithören der Kommunikation zwischen Lesegerät und Transponder möglich ist. Daher wird gemäß der zweiten Variante die Feldstärke im Bereich x»r erfasst, beispielsweise mittels einer dritten Leiterschleife im Lesegerät. Anhand des gemessenen Wertes können das erste und zweite Magnetfeld, bzw. das Verhältnis der Ströme $i2/i1$, mittels der Regelschaltung angepasst werden, um eine Feldauslöschung im abhörsicheren Bereich näherungsweise zu erreichen, so dass die in der Entfernung x»r gemessene magnetische Feldstärke einen Minimalwert annimmt.

Soll das Lesegerät mit passiven Transpondern kommunizieren, so muss die Feldstärke der ersten, kleineren Antennenspule ausreichend groß sein, damit die Transpondereinheit mit ausreichend Energie versorgt wird. Dementsprechend sollte der Spulendurchmesser der ersten Antennenspule relativ klein gewählt werden. Die Energieversorgung passiver Transponder ist in RFID-Systemen dennoch nur bei geringem Abstand (ca. 10 cm) zwischen Lesegerät und Transpondereinheit möglich. Da die Feldstärke einer kleinen Spule mit zunehmendem Abstand vergleichsweise früh abfällt, ist der Ansprechbereich des Lesegeräts relativ klein.

Erfolgt die Datenübertragung dagegen zwischen dem erfindungsgemäßen Lesegerät und einem aktiven Transponder, so muss bei der Anpassung des Lesegeräts nicht auf die Energiereichweite des Lesegeräts geachtet werden. Vielmehr kann der Kommunikationsbereich des Lesegeräts entsprechend größer gewählt werden, indem der Durchmesser der kleineren, ersten Spule entsprechend groß gewählt wird. Dementsprechend ist in diesem Fall das Nutzsignal auch noch in relativ großer Entfernung vom aktiven Transponder detektierbar. Vorteilhaft ist es auch in diesem Fall, wenn die Differenz zwischen den beiden Spulenradien der kleinen und großen Antennenspulen groß ist. Dann ist das Nutzsignal im Kommunikationsbereich besonders leicht zu detektieren, da die Feldstärke des zweiten Magnetfelds vergleichsweise gering ist. Dagegen ist der Betrag der ersten und zweiten Feldstärke im abhörsicheren Bereich gleich, so dass sich die Magnetfelder bei entgegengesetzten Ausrichtungen auslöschen.

Weitere Merkmale und Vorteile der Erfindung ergeben sich aus der folgenden Beschreibung verschiedener, erfindungsgemäßer Ausführungsbeispiele und Ausführungsalternativen im Zusammenhang mit den begleitenden Zeichnungen. Darin zeigen:

Figur 1 schematisch den Aufbau eines erfindungsgemäßen Lesegeräts;

Figur 2 den Feldstärkeverlauf in der Nähe zweier Antennenspulen mit unterschiedlichen Spulendurchmessern und erfindungsgemäß angepassten Strömen in den Spulen;

Figur 3 einen Stromspiegel zur Verwendung in dem erfindungsgemäßen Lesegerät; und

Figur 4 einen Vergleich zwischen dem Feldstärkeverlauf eines herkömmlichen Lesegeräts und dem eines erfindungsgemäßen Lesegeräts.

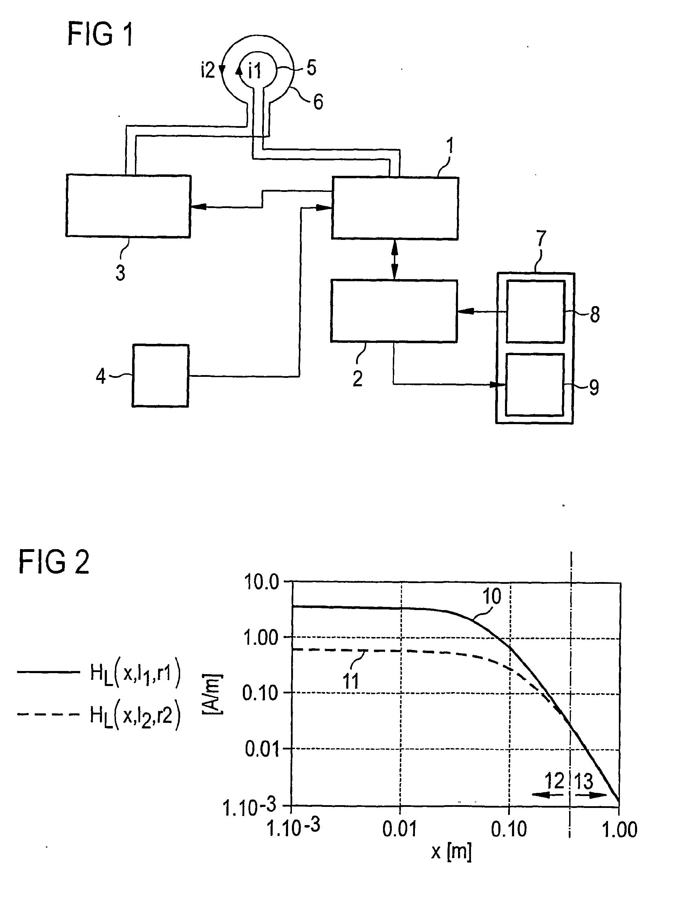

Figur 1 zeigt schematisch den Aufbau eines erfindungsgemäßen Lesegeräts. Prinzipiell umfasst das Lesegerät einen ersten Sender 1, der gleichzeitig Empfänger ist, einen Modulator/Demodulator 2, einen zweiten Sender 3 und einen Oszillator 4 zur Erzeugung einer Sendefrequenz der beiden Sender 1, 3. Der erste Sender 1 ist mit einer ersten Sendeantenne 5 und der zweite Sender 3 mit einer zweiten Sendeantenne 6 verbunden. Der Radius der ersten Sendeantenne 5 wird dabei kleiner gewählt als der Radius der zweiten Sendeantenne 6. Durch die erste Sendeantenne 5 fließt der Strom i1 und durch die zweite Sendeantenne 6 fließt der Strom i2, um an den Sendeantennen 5, 6, welche als Leiterschleifen ausgebildet sind, jeweils ein Magnetfeld mit einer entsprechenden Feldstärke zu erzeugen. Der zweite Sender 3 speist den Strom i2 in die zweite Leiterschleife 6, welcher proportional zum Strom i1 in der ersten Leiterschleife 5 ist: i1= Vi*i2. Die Richtung der Ströme i1, i2 wird so gewählt, dass die entstehenden Magnetfelder in entgegengesetzte Richtungen zeigen.

Die Leiterschleifen 5, 6 sind vorzugsweise in einer gemeinsamen Ebene angeordnet. Außerdem sind die beiden Leiterschleifen 5, 6, wie in Figur 1 gezeigt, vorzugsweise koaxial angeordnet. Bei dieser Anordnung der Leiterschleifen 5, 6 können deren Magnetfelder und Ansprechbereiche genau aufeinander abgestimmt werden.

Des weiteren verfügt das Lesegerät über eine Steuerung 7, z.B. einen programmierbaren Mikroprozessor. Mittels der Steuerung 7 werden im Sendebetrieb des Lesegeräts an eine Transpondereinheit (nicht gezeigt) zu übertragende Daten 8 an den ersten Modulator/Demodulator 2 geleitet, um ein Trägersignal des Lesegeräts entsprechend zu modulieren. Im Empfangsbetrieb des Lesegeräts werden von der Transpondereinheit empfangene Daten 9 vom Modulator/Demodulator 2 demoduliert und an die Steuerung 7 geleitet.

Der erste Sender 1 mit dem ersten Modulator/ Demodulator 2 ist in herkömmlicher Weise aufgebaut. Dadurch kann mit einer Transpondereinheit im Ansprechbereich des Lesegeräts in beide Richtungen kommuniziert werden, also Daten an den Transponder gesendet oder vom Transponder empfangen werden. Der zweite Sender 3 ist nicht zum Empfangen von Daten vorgesehen. Der zweite Sender 3 wird idealerweise durch einen Stromspiegel realisiert, es sind jedoch auch andere Schaltungen denkbar.

Figur 2 zeigt den Verlauf der magnetischen Feldstärke H(x, I, r) der beiden Leiterschleifen 5, 6 mit unterschiedlichen Radien r1 und r2 im Abstand x, wobei unterschiedliche Ströme i1, i2 durch die Leiterschleifen 5, 6 fließen. Die Feldstärken 10 (kleine Leiterschleife 5), 11 (große Leiterschleife 6) der beiden Magnetfelder verlaufen bis zu einer bestimmten, vom Spulenradius abhängigen Entfernung x nahezu konstant, fallen dann jedoch ab. Dies bedeutet, dass es für jede gewünschte Lesereichweite eines RFID-Systems einen optimalen Antennenradius r gibt. Die Ströme sind dabei so angepasst, dass die kleinere Leiterschleife 5 mit dem Radius r1 bei geringem Abstand x zur Antenne ein deutlich stärkeres Magnetfeld H als die größere Leiterschleife 6 mit dem Radius r2 aufweist. Etwa bei einem Abstand x=r1 beginnt die Feldstärke H der Leiterschleife 5 mit 60 dB/Dekade abzufallen. Ebenso fällt die Feldstärke der Leiterschleife 6 bei einem bestimmten Abstand mit 60 dB/Dekade kontinuierlich ab.

Die Radien r1, r2 der beiden Leiterschleifen 5, 6 sowie die Sendeleistung des ersten Senders 1 und des zweiten Senders 3 sind nun so ausgelegt, dass innerhalb eines Kommunikationsbereichs 12 das Daten enthaltende erste Magnetfeld der Leiterschleife 5 deutlich stärker ist als das zweite Magnetfeld der Leiterschleife 6. Erfindungsgemäß wird die von den Leiterschleifen 5, 6 erzeugte Feldstärke H(x, I, r) so eingestellt, dass die beiden Feldstärken 10, 11 im Bereich des mit 60 dB/Dekade abfallenden Feldes, also außerhalb des Kommunikationsbereichs 12, den gleichen Betrag annehmen. Durch eine gleichzeitige, gegenphasige Abstrahlung der Felder wird eine Auslöschung in diesem Bereich erreicht (H1=-H2). Deshalb kann dieser Bereich außerhalb des Kommunikationsbereichs 12 als abhörsicherer Bereich 13 bezeichnet werden, da in diesem keine Feldstärken detektierbar sind.

Die in Figur 2 dargestellte Messung wurde mit folgenden Werten durchgeführt

-    Leiterschleife 5: i1= 0,5 A ; r1= 0,07 cm
-    Leiterschleife 6: i2 = 0,15 A , r2 = 0,13 cm

Die Feldstärke einer Leiterschleife im Nahbereich berechnet sich wie folgt:

$$H(x,r) = \frac{I \cdot r^2 \cdot N}{2\sqrt{\left(x^2 + r^2\right)^3}} \qquad [1]$$

N: Windungszahl der Leiterschleife

Folgender Zusammenhang ergibt sich für die Einstellung der Ströme i1, i2 der Leiterschleifen 5, 6, wenn die Magnetfelder im Abstand x ausgelöscht werden sollen, also den gleichen Betrag haben sollen:

$$\frac{I_1}{I_2} = \frac{V^2 \cdot \sqrt{\left(x^2 + r_1^2\right)^3}}{\sqrt{\left(x^2 + r_1^2 \cdot V^2\right)^3}} \quad [2]$$

V: Verhältnis der Spulenradien (V=r2/r1), N=1

In dem für die erfindungsgemäße Anordnung interessanten Entfernungsbereich des mit 60 dB/Dekade abfallenden Feldes, d.h. x»r, nähert sich das Stromverhältnis i1/i2 dem Wert $V^2$:

$$\frac{I_1}{I_2} = V^2 = \left(\frac{r_2}{r_1}\right)^2 \ ; \text{für x >> r1} \quad [3]$$

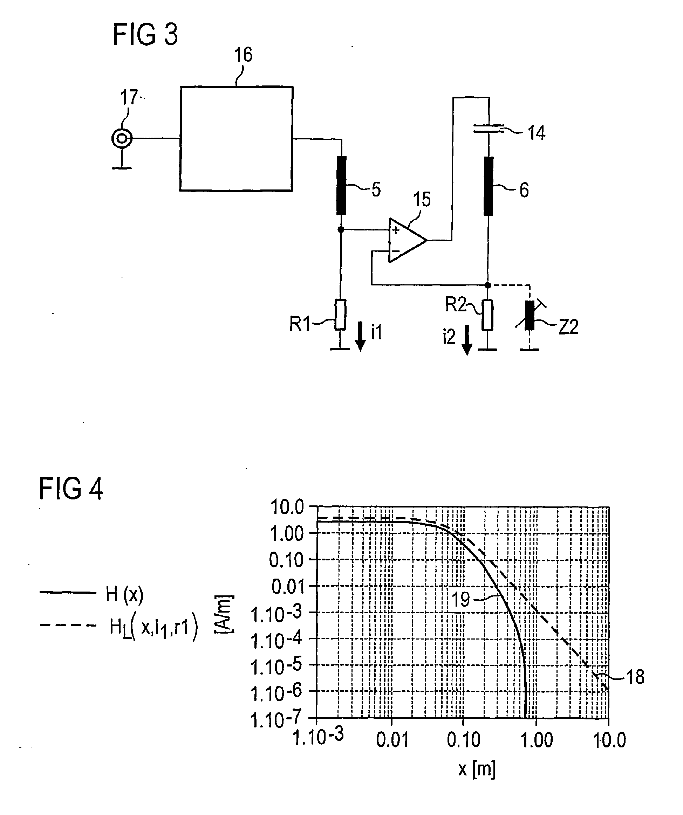

Um die Feldauslöschung außerhalb des Kommunikationsbereichs 12 des Lesegeräts sicherzustellen, ist erfindungsgemäß vorgesehen, die Ströme i1, i2 in den beiden Leiterschleifen 5, 6 über einen Stromspiegel in Betrag und Phase miteinander zu verknüpfen. Eine an das erfindungsgemäße Lesegerät angepasste Schaltungsanordnung ist in Figur 3 dargestellt.

Fig. 3 zeigt eine erste Leiterschleife 5 und eine zweite Leiterschleife 6. Über zwei Dämpfungswiderstände R1, R2, die jeweils zwischen den beiden Leiterschleifen 5, 6 und Masse angeordnet sind, fließt ein erster Strom i1 respektive ein zweiter Strom i2. Ein erster Eingang eines Differenzverstärkers 15 ist mit der Verbindungsleitung zwischen der ersten Leiterschleife 5 und dem ersten Widerstand R1 verbunden. Analog ist ein zweiter Eingang des Differenzverstärkers 15 ist mit der Verbindungsleitung zwischen der zweiten Leiterschleife 6 und dem zweiten Widerstand R2 verbunden. Der Ausgang des Differenzverstärkers 15 ist über einen Kondensator 14 mit der zweiten Leiterschleife 6 verbunden. Ferner ist die erste Leiterschleife 5 über ein die Impedanz anpassendes Anpassnetzwerk 16 mit einem Signale übertragenden Koaxialkabel 17 verbunden.

Als Widerstand R1 wird ein üblicherweise in Reihe zur Leiterschleife 5 geschalteter Dämpfungswiderstand eingesetzt werden. Für die Ströme i1, i2 in der erfindungsgemäßen Anordnung ergibt sich dann folgender Zusammenhang:

$$\frac{I_1}{I_2} = V^2 = \frac{R_2}{R_1} \quad [4]$$

Der Kondensator 14 bildet mit der Leiterschleife 6 einen Schwingkreis auf der Sendefrequenz des Lesegeräts, beispielsweise 13,56 MHz. Ein Differenzverstärker 15 wird an einer symmetrischen Versorgungsspannung (+Vcc, - Vcc) betrieben, so dass auch das Ausgangssignal ein zum Nullpunkt symmetrisches Sinussignal sein kann. Des weiteren ist der Differenzverstärker 15 als Leistungsverstärker ausgebildet, um den benötigten Strom i2 für die zweite Leiterschleife 6 bereitzustellen. Optional kann eine abgleichbare Impedanz Z2 parallel zum Widerstand R2 vorgesehen sein, um systematische Fehler des Stroms i2 in Betrag und/oder Phase zu korrigieren.

Weiterhin kann optional vorgesehen sein, den Widerstand R2 und/ oder die Impedanz Z2 regelbar auszugestalten. Als Stellsignal für deren Regelung kann eine außerhalb des Kommunikationsbereiches (x>>r) festgestellte magnetische Feldstärke verwendet werden. Somit kann die in diesem Bereich (x>>r) festgestellte (Rest-) Feldstärke auf ein Minimum geregelt werden. Die Regelschaltung 3 kann also ein Stellsignal von einem Detektor erhalten, der außerhalb des gewünschten Kommunikationsbereiches angeordnet ist. Der Detektor umfaßt zumindest einen Magnetfeldsensor, beispielsweise in Form einer Leiterschleife bzw. Antenne, und eine Schaltung zur Umsetzung des Sensorsignals in das Stellsignal, beispielsweise in Form eines Empfängers.

Im HF-Bereich kann die Anschaltung einer Antenne im Lesegerät unerwünschte Effekte wie Leistungsreflexionen, Impedanztransformation und parasitäre Leistungsabstrahlung hervorrufen. Um dies zu vermeiden, werden in RFID-Systemen Stecker und Kabel verwendet, welche einheitlich für eine Leitungsimpedanz von 50 Ohm ausgelegt und als Massenprodukte entsprechend preisgünstig sind. Die Leiterschleife 5 stellt im Arbeitsfrequenzbereich des RFID-Systems eine Impedanz dar. Daher erfolgt der Anschluss der Leiterschleife 5 zur Leistungsanpassung an ein 50 Ohm System beispielsweise über das Anpassnetzwerk 16, welches die Impedanz der Leiterschleife 1 auf einen Wert von 50 Ohm real transformiert (anpasst). Die Leistungsübertragung von einer Leserendstufe (nicht gezeigt) kann dann beispielsweise durch das Koaxialkabel 17 (nahezu) frei von Verlusten und unerwünschter Abstrahlung durchgeführt werden.

Figur 4 zeigt einen Vergleich zwischen dem Feldstärkeverlauf 18 eines herkömmlichen Lesegeräts und dem Feldstärkeverlauf 19 eines erfindungsgemäßen Lesegeräts. Der Figur 4 ist zu entnehmen, dass bereits bei einem Abstand von ca. 75 cm zum Lesegerät das Signal des Lesegeräts so schwach ist, dass selbst das Abhören des Signals vom Lesegerät zum Transponder unmöglich ist.

**Patentansprüche**

1. Verfahren zur Übertragung von Daten und/ oder Energie zwischen einem Lesegerät und einer Transpondereinheit mittels einer ein erstes Magnetfeld erzeugenden ersten Antennenspule (5) des Lesegeräts, wobei mittels einer zweiten Antennenspule (6) ein zweites Magnetfeld erzeugt wird, wobei mittels der zweiten Antennenspule (5) das zweite Magnetfeld derart erzeugt wird, dass sein Betrag in einem Nahbereich (12) des Lesegeräts kleiner als der des ersten Magnetfelds ist und außerhalb des Nahbereichs (12) näherungsweise den gleichen Betrag mit umgekehrtem Vorzeichen besitzt, **gekennzeichnet durch** Regeln der Ströme in den beiden Antennenspulen (5, 6), so dass die Ströme in Betrag und Phase miteinander verknüpft werden.

2. Verfahren nach Anspruch 1, **dadurch gekennzeichnet, dass** die Mittelachse der ersten Antennenspule (5) innerhalb der zweiten Antennenspule (6) angeordnet wird, wobei sie vorzugsweise mit der Mittelachse der zweiten Antennenspule (6) zusammenfällt.

3. Verfahren nach Anspruch 1 oder 2, **dadurch gekennzeichnet, dass** die beiden Antennenspulen (5, 6) mit Strömen (i1, i2) gespeist werden, durch welche die daraus resultierenden magnetischen Felder in entgegengesetzte Richtungen zeigen.

4. Verfahren nach Anspruch 1 bis 3, **dadurch gekennzeichnet, daß** die beiden Antennenspulen mit gegenphasigen Strömen gespeist werden.

5. Verfahren nach Anspruch 1 bis 4, **dadurch gekennzeichnet, daß** die beiden Antennenspulen mit Strömen gespeist werden, deren Amplituden proportional zueinander sind.

6. Verfahren nach Anspruch 1 bis 5, **dadurch gekennzeichnet, dass** die Ströme in den beiden Antennenspulen (5, 6) über einen Stromspiegel in Betrag und Phase miteinander verknüpft werden.

7. Verfahren nach einem der Ansprüche 1 bis 6, **dadurch gekennzeichnet, dass** eine Magnetfeldstärke außerhalb des Nahbereichs erfasst wird und das Magnetfeld der ersten und/oder zweiten Antennenspule (5/6) so angepasst wird, dass die erfasste Magnetfeldstärke einen Minimalwert annimmt.

8. Verfahren nach einem der Ansprüche 1 bis 7, **dadurch gekennzeichnet, dass** in der ersten Antennenspule (5) und der zweiten Antennenspule (6) hochfrequente Magnetfelder gleicher Frequenz erzeugt werden.

9. Verfahren nach einem der Ansprüche 1 bis 8, **dadurch gekennzeichnet, dass** mittels des ersten Magnetfelds ein Daten (8) enthaltendes Nutzsignal zur Transpondereinheit gesendet und/oder von der Transpondereinheit empfangen wird.

10. Verfahren nach einem der Ansprüche 1 bis 9, **gekennzeichnet durch** das Anpassen der Feldstärken der beiden Magnetfelder **durch** Änderung der jeweiligen Spulendurchmesser, um den Nahbereich (9) des Lesegeräts festzulegen.

11. Lesegerät zur Übertragung von Daten und/ oder Energie zwischen dem Lesegerät und mindestens einer Transpondereinheit, wobei das Lesegerät eine erste Antennenspule (5, 6) umfasst, um ein erstes Magnetfeld zu erzeugen, und eine zweite Antennenspule, um ein zweites Magnetfeld zu erzeugen, wobei das zweite Magnetfeld außerhalb eines Nahbereichs (10) des Lesegeräts näherungsweise den gleichen Betrag und ein umgekehrtes Vorzeichen besitzt wie das erste Magnetfeld und im Nahbereich (10) schwächer als das erste Magnetfeld ist, **dadurch gekennzeichnet; dass** eine Regelschaltung zur Einstellung des ersten und zweiten Magnetfeldes eingerichtet ist und die Regelschaltung eingerichtet ist, zur Einstellung der Magnetfelder die Ströme (i1, i2) für die Antennenspulen so zu regeln, dass die Ströme in den beiden Antennenspulen (5, 6) in Betrag und Phase miteinander verknüpft sind.

12. Lesegerät nach Anspruch 11, **dadurch gekennzeichnet, dass** das Lesegerät eingerichtet ist, die Antennenspulen (5, 6) mit Strömen (i1, i2) zu speisen, durch welche die daraus resultierenden magnetischen Felder in entgegengesetzte Richtungen zeigen.

13. Lesegerät nach Anspruch einem der Ansprüche 11 bis 12, **dadurch gekennzeichnet, dass** die Regelschaltung einen Stromspiegel umfasst.

14. Lesegerät nach Anspruch 13, **dadurch gekennzeichnet, dass** der Stromspiegel eingerichtet ist, den Strom (i2) für die zweite Antennenspule (6) von dem Strom (i1) für die erste Antennenspule (5) abzuleiten oder umgekehrt.

15. Lesegerät nach einem der Ansprüche 11 bis 14, **dadurch gekennzeichnet, daß** die zweite Antennspule (6) mit einem in Reihe geschalteten Kondensator (14) einen Serienresonanzkreis bildet, dessen Resonanzfrequenz der Sendefrequenz des Lesegerätes entspricht.

16. Lesegerät nach einem der Ansprüche 11 bis 15, **dadurch gekennzeichnet, daß** ein Widerstand ($R_2$) und/oder eine Impedanz ($Z_2$), die zwischen Masse und der zweiten Antenne (6) angeordnet sind, regelbar sind und für deren Regelung eine außerhalb des Nahbereichs erfaßte Feldstärke als Stellgröße dient.

**17.** Lesegerät nach einem der Ansprüche 11 bis 16, **gekennzeichnet durch** eine Einrichtung zum Erfassen einer Magnetfeldstärke außerhalb des Nahbereichs, wobei die Regelschaltung eingerichtet ist, die Magnetfelder abhängig von der erfassten Magnetfeldstärke so anzupassen, dass die Magnetfeldstärke einen Minimalwert annimmt.

**18.** Lesegerät nach Anspruch 17, **dadurch gekennzeichnet, dass** die Einrichtung zur Erfassung der Magnetfeldstärke außerhalb des Nahbereichs eine dritte Antennenspule und eine Schaltung zur Bestimmung einer durch die dritte Antennenspule gemessenen Magnetfeldstärke umfasst.

**19.** Lesegerät nach einem der Ansprüche 11 bis 18, **dadurch gekennzeichnet, dass** die zweite Antennenspule (6) einen im Vergleich zur ersten Antennenspule (5) größeren Durchmesser besitzt.

**20.** Lesegerät nach einem der Ansprüche 11 bis 19, **dadurch gekennzeichnet, dass** die erste und die zweite Antennenspule (5, 6) in einer gemeinsamen Ebene angeordnet sind.

**21.** Lesegerät nach einem der Ansprüche 11 bis 20, **dadurch gekennzeichnet, dass** die beiden Antennenspulen (5, 6) koaxial angeordnet sind.

**22.** Lesegerät nach einem der Ansprüche 11 bis 21, **dadurch gekennzeichnet, dass** das Lesegerät eingerichtet ist, über die erste Antennenspule (5) ein Daten enthaltendes Nutzsignal an die mindestens eine Transpondereinheit zu senden und/ oder von der mindestens einen Transpondereinheit zu empfangen.

**23.** System zur Übertragung von Daten und/ oder Energie zwischen einer Transpondereinheit und einem Lesegerät nach einem der Ansprüche 11 bis 22.

**Claims**

**1.** Method for transmitting data and/ or energy between a reading device and a transponder unit by means of a first antenna coil (5) of the reading device generating a first magnetic field, wherein a second magnetic field is generated by means of a second antenna coil (6), wherein the second magnetic field is generated in such a fashion by the second antenna coil (5) *[sic]* that in a near field (12) of the reading device its absolute value is smaller than that of the first magnetic field and outside the near field (12) has approximately the same absolute value with opposite sign, **characterized by** controlling the currents in the two antenna coils (5, 6) in such a fashion that the currents are linked to each other with regard to absolute value and phase.

**2.** Method according to claim 1, **characterized in that** the center axis of the first antenna coil (5) is arranged within the second antenna coil (6), wherein it preferably coincides with the center axis of the second antenna coil (6).

**3.** Method according to claim 1 or 2, **characterized in that** the two antenna coils (5, 6) are supplied with currents (i1, i2), through which the magnetic fields resulting therefrom point in opposite directions.

**4.** Method according to claim 1 to 3, **characterized in that** the two antenna coils are supplied with opposite-phase currents.

**5.** Method according to claim 1 to 4, **characterized in that** the two antenna coils are supplied with currents whose amplitudes are proportional to each other.

**6.** Method according to claim 1 to 5, **characterized in that** the currents in the two antenna coils (5, 6) are linked to each other with regard to absolute value and phase via a current mirror.

**7.** Method according to any of claims 1 to 6, **characterized in that** a magnetic field strength is detected outside the near field and the magnetic field of the first and/ or the second antenna coil (5/6) is adjusted in such a fashion that the detected magnetic field strength reaches a minimum value.

**8.** Method according to any of claims 1 to 7, **characterized in that** in the first antenna coil (5) and the second antenna coil (6) high-frequency magnetic fields having the same frequency are generated.

**9.** Method according to any of claims 1 to 8, **characterized in that** by means of the first magnetic field a useful signal containing data (8) is sent to the transponder unit and/ or received from the transponder unit.

**10.** Method according to any of claims 1 to 9, **characterized by** the adjustment of the field strengths of the two magnetic fields by changing the respective coil diameters, in order to define the near field (9) of the reading device.

**11.** Reading device for transmitting data and/ or energy between the reading device and at least one transponder unit, the reading device comprising one first antenna coil (5, 6), in order to generate a first magnetic field, and a second antenna coil, in order to generate a second magnetic field, the second magnetic field having approximately the same absolute value and opposite sign as the first magnetic field outside the near field (10) of the reading device and being weaker than the first magnetic field inside the near field (10), **characterized in that** a control circuit for adapting the first and the second magnetic field is provided and the control circuit is adapted, for the purpose of adapting the magnetic fields, to control the currents (i1, i2) for the antenna coils in such a fashion that the currents in the two antenna coils (5, 6) are linked to each other with regard to absolute value and phase.

12. Reading device according to claim 11, **characterized in that** the reading device is adapted to supplying the antenna coils (5, 6) with currents (i1, i2), through which the magnetic fields resulting therefrom point in opposite directions.

13. Reading device according to any of claims 11 to 12, **characterized in that** the control circuit comprises a current mirror.

14. Reading device according to claim 13, **characterized in that** the current mirror is adapted to deriving the current (i2) for the second antenna coil (6) from the current (i1) for the first antenna coil (5) or vice versa.

15. Reading device according to any of claims 11 to 14, **characterized in that** the second antenna coil (6) forms a serial resonant circuit with a serially connected capacitor (14), the resonance frequency of the serial resonant circuit corresponding to the transmission frequency of the reading device.

16. Reading device according to any of claims 11 to 15, **characterized in that** a resistor ($R_2$) and/ or an impedance ($Z_2$), which are arranged between ground and the second antenna (6), are controllable, and for whose control a field strength detected outside the near field serves as input value.

17. Reading device according to any of claims 11 to 16, **characterized by** a device for detecting a magnetic field strength outside the near field, wherein the control circuit is adapted to adjusting the magnetic fields depending on the detected magnetic field strength in such a fashion that the magnetic field strength reaches a minimum value.

18. Reading device according to claim 17, **characterized in that** the device for detecting the magnetic field strength outside the near field comprises a third antenna coil and a circuit for determining a magnetic field strength measured by the third antenna coil.

19. Reading device according to any of claims 11 to 18, **characterized in that** the second antenna coil (6) has a diameter which is larger in comparison to that of the first antenna coil (5).

20. Reading device according to any of claims 11 to 19, **characterized in that** the first and the second antenna coil (5, 6) are arranged in one common plane.

21. Reading device according to any of claims 11 to 20, **characterized in that** the two antenna coils (5, 6) are arranged coaxially.

22. Reading device according to any of claims 11 to 21, **characterized in that** the reading device is adapted to sending to and/ or receiving from the at least one transponder unit via the first antenna coil (5) a useful signal containing data.

23. System for transmitting data and/ or energy between a transponder unit and a reading device according to one of claims 11 to 22.

**Revendications**

1. Procédé de transmission de données et/ou d'énergie entre un appareil de lecture et une unité de transpondeur au moyen d'une première bobine d'antenne (5) de l'appareil de lecture, ladite bobine d'antenne générant un premier champ magnétique, un second champ magnétique étant généré au moyen d'une seconde bobine d'antenne (6), le second champ magnétique étant généré de telle sorte au moyen de la seconde bobine d'antenne (5) que sa valeur absolue est, dans une zone proche (12) de l'appareil de lecture, inférieure à celle du premier champ magnétique, et possède, à l'extérieur de la zone proche (12), approximativement la même valeur absolue avec signe inversé, **caractérisé par** régulation des courants dans les deux bobines d'antenne (5, 6), de telle sorte que les courants sont reliés entre eux en valeur absolue et en phase.

2. Procédé selon la revendication 1, **caractérisé en ce que** l'axe médian de la première bobine d'antenne (5) est disposé à l'intérieur de la seconde bobine d'antenne (6), de préférence de telle sorte qu'il coïncide avec l'axe médian de la seconde bobine d'antenne (6).

3. Procédé selon revendication 1 ou 2, **caractérisé en ce que** les deux bobines d'antenne (5, 6) sont alimentées par des courants (i1, i2) par lesquels les champs magnétiques en résultant sont orientés dans des directions opposées.

4. Procédé selon revendication 1 à 3, **caractérisé en ce que** les deux bobines d'antenne sont alimentées par des courants en opposition de phase.

5. Procédé selon revendication 1 à 4, **caractérisé en ce que** les deux bobines d'antenne sont alimentées par des courants dont les amplitudes sont proportionnelles l'une à l'autre.

6. Procédé selon revendication 1 à 5, **caractérisé en ce que** les courants sont reliés entre eux en valeur absolue et en phase dans les deux bobines d'antenne (5, 6) par l'intermédiaire d'un miroir de courant.

7. Procédé selon une des revendications de 1 à 6, **caractérisé en ce qu'**une intensité du champ magnétique est relevée en dehors de la zone proche et **en ce que** le champ magnétique de la première et/ou de la seconde bobine d'antenne (5/6) est ajusté de telle sorte que l'intensité du champ magnétique relevée adopte une valeur minimale.

8. Procédé selon une des revendications de 1 à 7, **caractérisé en ce que** des champs magnétiques de haute fréquence de même fréquence sont générés dans la première bobine d'antenne (5) et dans la seconde bobine d'antenne (6).

9. Procédé selon une des revendications de 1 à 8, **caractérisé en ce qu'**un signal utile contenant des données (8) est, au moyen du premier champ magnétique, envoyé à l'unité de transpondeur et/ou reçu de la part de l'unité de transpondeur.

10. Procédé selon une des revendications de 1 à 9, **caractérisé par** l'ajustement de l'intensité du champ des deux champs magnétiques par modification des diamètres de bobine respectifs pour définir la zone proche (9) de l'appareil de lecture.

11. Appareil de lecture destiné à la transmission de données et/ou d'énergie entre l'appareil de lecture et au moins une unité de transpondeur, l'appareil de lecture comportant une première bobine d'antenne (5, 6) pour générer un premier champ magnétique, et une seconde bobine d'antenne pour générer un second champ magnétique, le second champ magnétique possédant, à l'extérieur d'une zone proche (10) de l'appareil de lecture, approximativement la même valeur absolue que le premier champ magnétique et un signe inversé par rapport à ce dernier, et étant inférieur au premier champ magnétique dans la zone proche (10), **caractérisé en ce qu'**un circuit de régulation est équipé pour le réglage du premier et du second champ magnétique et **en ce que** le circuit de régulation est, pour le réglage des champs magnétiques, équipé pour réguler les courants (i1, i2) pour les bobines d'antenne de telle sorte que les courants sont reliés entre eux en valeur absolue et en phase dans les deux bobines d'antenne (5, 6).

12. Appareil de lecture selon la revendication 11, **carac-**

**térisé en ce que** l'appareil de lecture est équipé pour alimenter les bobines d'antenne (5, 6) par des courants (i1, i2) par lesquels les champs magnétiques en résultant sont orientés dans des directions opposées.

13. Appareil de lecture selon une des revendications de 11 à 12, **caractérisé en ce que** le circuit de régulation comprend un miroir de courant.

14. Appareil de lecture selon la revendication 13, **caractérisé en ce que** le miroir de courant est équipé pour dériver, du courant (i1) pour la première bobine d'antenne (5), le courant (i2) pour la seconde bobine d'antenne (6) ou inversement.

15. Appareil de lecture selon une des revendications de 11 à 14, **caractérisé en ce que** la seconde bobine d'antenne (6) constitue avec un condensateur (14) monté en série un circuit résonant série dont la fréquence de résonance correspond à la fréquence d'émission de l'appareil de lecture.

16. Appareil de lecture selon une des revendications de 11 à 15, **caractérisé en ce qu'**une résistance ($R_2$) et/ou une impédance ($Z_z$), qui sont disposées entre la masse et la deuxième antenne (6), sont régulables, et **en ce qu'**une intensité de champ relevée en dehors de la zone proche sert de grandeur de réglage pour leur régulation.

17. Appareil de lecture selon une des revendications de 11 à 16, **caractérisé par** un équipement destiné à relever une intensité de champ magnétique en dehors de la zone proche, le circuit de régulation étant équipé pour ajuster les champs magnétiques en fonction de l'intensité du champ magnétique relevée, de telle sorte que l'intensité du champ magnétique relevée adopte une valeur minimale.

18. Appareil de lecture selon la revendication 17, **caractérisé en ce que** l'équipement destiné à relever l'intensité de champ magnétique en dehors de la zone proche comprend une troisième bobine d'antenne et un circuit pour la détermination de l'intensité de champ magnétique mesurée par la troisième bobine d'antenne.

19. Appareil de lecture selon une des revendications de 11 à 18, **caractérisé en ce que** la seconde bobine d'antenne (6) a un diamètre plus élevé en comparaison avec la première bobine d'antenne (5).

20. Appareil de lecture selon une des revendications de 11 à 19, **caractérisé en ce que** la première et la seconde bobine d'antenne (5, 6) sont disposées dans un plan commun.

**21.** Appareil de lecture selon une des revendications de 11 à 20, **caractérisé en ce que** les deux bobines d'antenne (5, 6) sont disposées coaxialement.

**22.** Appareil de lecture selon une des revendications de 11 à 21, **caractérisé en ce que** l'appareil de lecture est équipé pour, par l'intermédiaire de la première bobine d'antenne (5), envoyer à la au moins une unité de transpondeur un signal utile contenant des données et/ou pour recevoir un tel signal de la part de la au moins une unité de transpondeur.

**23.** Système de transmission de données et/ou d'énergie entre une unité de transpondeur et un appareil de lecture selon une des revendications de 11 à 22.

FIG 1

FIG 2

$$H_L(x, I_1, r1)$$
$$H_L(x, I_2, r2)$$

**FIG 3**

**FIG 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6429768 B1
- EP 0833169 A1
- WO 9943096 A1
- DE 19715215 C1
- EP 1494311 A1